(19) Europäisches Patentamt
European Patent Office
Office européen des brevets

(11) EP 3 032 497 A2

(12) **EUROPEAN PATENT APPLICATION**

(43) Date of publication:
**15.06.2016 Bulletin 2016/24**

(51) Int Cl.:
***G06T 11/00*** (2006.01)

(21) Application number: **15306291.4**

(22) Date of filing: **13.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.12.2014 EP 14306979**

(71) Applicant: **Thomson Licensing
92130 Issy-les-Moulineaux (FR)**

(72) Inventors:
• **Hoerentrup, Jobst
30974 Wennigsen (DE)**
• **Jachalsky, Joern
30974 Wennigsen (DE)**

(74) Representative: **Huchet, Anne et al
Technicolor
1, rue Jeanne d'Arc
92443 Issy-les-Moulineaux (FR)**

(54) **METHOD AND APPARATUS FOR COLOR CORRECTION**

(57)     A method and an apparatus (20) for color correction in an alpha matting process are described. A color retrieving unit (23) retrieves (10) an initial foreground color and an initial background color associated with a pixel with an original color in a region of transition between a foreground object and a background. An alpha value retrieving unit (24) retrieves (11) an alpha value associated with the pixel. A color correction unit (25) then determines (12) a corrected foreground color and a corrected background color from the original color, the initial foreground color, the initial background color, and the alpha value based on a minimization of an energy function.

Fig. 1

EP 3 032 497 A2

**Description**

**FIELD**

The present solution relates to a method and an apparatus for color correction. In particular, a method and an apparatus for color correction in an alpha matting process are described.

**BACKGROUND**

Alpha matting refers to the problem of softly extracting a foreground object out of an image. In contrast to binary segmentation, where each pixel is either classified as fully foreground or background, alpha matting recognizes the existence of "mixed" pixels. A major reason for such mixed pixels is the limited resolution of cameras, where light from the foreground object and the background contribute to the incoming light on a sensor element. Other reasons can be motion-blur and (semi-) transparencies in the object itself. Alpha matting and thus the soft extraction of objects from a still image or a video sequence is a fundamental problem in computer vision in general and movie post-production in particular.

An image *I* is modeled as a linear mix between a foreground *F* and a background *B*:

$$I = \alpha F + (1 - \alpha)B. \qquad (1)$$

This equation is commonly referred to as the *compositing equation*. The coefficients in $\alpha$ (the "alpha matte") are defined to be between 0 and 1 (i.e., 0 and 100%). Here, $\alpha$ is used to denote a complete alpha matte. In the following, $\alpha$ denotes the opacity value of an individual pixel. Each coefficient describes the fraction to which light from the foreground object contributed to the incoming light on an image sensor element, i.e. to an image pixel. An alpha matting algorithm tries to estimate this alpha coefficient, as well as the unmixed foreground and background colors. Each (unmixed) color is defined by three parameters, e.g. R, G, and B values in case of the RGB color space. Alpha matting hence needs to determine seven unknowns (the right-hand side of Equation (1)) from only three knowns (the left-hand side of Equation (1)). The problem is thus ill-posed and requires additional constraints. One common constraint is a trimap, which is provided along with the input image or sequences thereof. The trimap indicates three different types of regions in the input image: known foreground, known background, and an unknown region where the foreground potentially mixes with the background. The task of the alpha matting algorithm is to estimate the alpha value for all pixels in the unknown region.

Many alpha matting algorithms have been developed over the recent years. Their computational complexity is usually very high, often preventing their application in professional post-production of high-resolution images. However, when composing an extracted object on a new background, the achievable results are usually much more visually appealing compared to results of a binary segmentation.

A good overview of current alpha matting methods is provided by [1]. Most top performing methods conduct an initial per-pixel estimation of the alpha value, the foreground color, and the background color. In a second step, the alpha matte is usually refined to reduce noise and to align the initial alpha matte to the structures, i.e. color gradients, visible in the image.

A lot of research has been spent on the refinement of the alpha matte. However, as mentioned above, the final goal of alpha matting is to softly extract a foreground object out of an image. On top of an alpha value, this includes the (unmixed) foreground color for each pixel. There is, however, only very little research on the refinement of foreground or background colors.

Given an alpha matte, in [2] it is assumed that the foreground *F* and background *B* are smooth, especially at matte edges. *F* and *B* are reconstructed such that $\alpha$, *F* and *B* well fit the compositing equation. Although the described method provides state of the art quality, the reconstruction requires solving a large sparse system of linear equations for each color channel. As such it is memory and compute intensive.

In [3] a regularization term is added to the approach in [2], that is useful for the special case of motion blur. Apart from that, the described method is even more memory and computationally intensive than the one in [2].

**SUMMARY**

It is an object of the present principles to propose an improved solution for color correction in an alpha matting process.

According to one aspect, a method for color correction in an alpha matting process comprises:

- retrieving an initial foreground color and an initial background color associated with a pixel with an original color in a region of transition between a foreground object and a background;
- retrieving an alpha value associated with the pixel; and
- determining a corrected foreground color and a corrected background color from the original color, the initial foreground color, the initial background color, and the alpha value based on a minimization of an energy function.

Accordingly, a computer readable storage medium has stored therein instructions enabling color correction in an alpha matting process, which, when executed by a computer, cause the computer to:

- retrieve an initial foreground color and an initial background color associated with a pixel with an original color in a region of transition between a foreground object and a background;
- retrieve an alpha value associated with the pixel; and
- determine a corrected foreground color and a corrected background color from the original color, the initial foreground color, the initial background color, and the alpha value based on a minimization of an energy function.

Also, in one embodiment an apparatus configured to perform color correction in an alpha matting process comprises:

- a color retrieving unit configured to retrieve an initial foreground color and an initial background color associated with a pixel with an original color in a region of transition between a foreground object and a background;
- an alpha value retrieving unit configured to retrieve an alpha value associated with the pixel; and
- a color correction unit configured to determine a corrected foreground color and a corrected background color from the original color, the initial foreground color, the initial background color, and the alpha value based on a minimization of an energy function.

In another embodiment, an apparatus configured to perform color correction in an alpha matting process comprises a processing device and a memory device having stored therein instructions, which, when executed by the processing device, cause the apparatus to:

- retrieve an initial foreground color and an initial background color associated with a pixel with an original color in a region of transition between a foreground object and a background;
- retrieve an alpha value associated with the pixel; and
- determine a corrected foreground color and a corrected background color from the original color, the initial foreground color, the initial background color, and the alpha value based on a minimization of an energy function.

The proposed method represents a universal color correction step in any alpha matting pipeline. It can be used as an ultra-fast alternative to existing refinement methods, or can serve as a final correction step in combination with an existing method. The image is preferably rendered on a display by applying the corrected foreground color and the corrected background color. Taken by itself, the solution is able to approach state of the art quality, sometimes even outperforming it, at only a fraction of the computational cost. Given its extremely low computational cost, it is well suited for the processing of high resolution content in post-production, and also better suited for consumer devices with comparably small CPU power and memory. Even though the CPU version is already very fast, the method can be implemented on a GPU in a straightforward manner.

The energy function preferably comprises a foreground color weighting factor for weighting a shift of the foreground color in color space and a background color weighting factor for weighting a shift of the background color in color space. For example, it may be known that the initial foreground color is better than the initial background color. With the appropriate choice of the weighting factors it can then be ensured that the foreground color is subjected to less correction than the background color.

In one embodiment, the foreground color weighting factor is alpha and the background color weighting factor is 1 minus alpha. When alpha is close to 1 this means that the initial foreground color is very likely estimated better than the initial background color. The corresponding larger weighting factor for the foreground color ensures that the correction of the foreground color is smaller than the correction of the background color. For alpha close to 0 the opposite holds.

In one embodiment, it is controlled whether the corrected foreground color or the corrected background color violates a color value range. In case of a violation of the color value range, according to one alternative, the initial foreground color and/or the initial background color are not corrected. According to another alternative, the correction of the affected color is reduced such that all corrected color components are within the color value range. Without any additional control the color values might be shifted outside their valid range. To prevent this, an additional color range control is introduced, which detects whether one or more components of a corrected color would fall outside the valid color range.

According to yet another alternative, in case the corrected foreground color or the corrected background color violates a color value range, a final corrected foreground color and a final corrected background color are determined, which are located on a line in color space defined by the corrected foreground color and the corrected background color. The final corrected foreground color and the final corrected background color are chose such that they fulfil the compositing equation.

**BRIEF DESCRIPTION OF THE DRAWINGS**

Fig. 1    schematically illustrates a method according to an embodiment of the invention for color correction in an alpha matting process;

Fig. 2    schematically depicts a first embodiment of an apparatus configured to perform a method according to the principles of the invention;

Fig. 3    schematically shows a second embodiment of an apparatus configured to perform a method according to the principles of the invention;

Fig. 4    illustrates a first solution for color range correction;

Fig. 5    illustrates a second solution for color range correction;

Fig. 6    shows SAD errors of foreground correction methods;

Fig. 7    depicts MSE errors of foreground correction methods;

Fig. 8    shows a first visual comparison of various color correction methods; and

Fig. 9    shows a second visual comparison of various color correction methods.

**DETAILED DESCRIPTION OF PREFERRED EMBODIMENTS**

For a better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims.

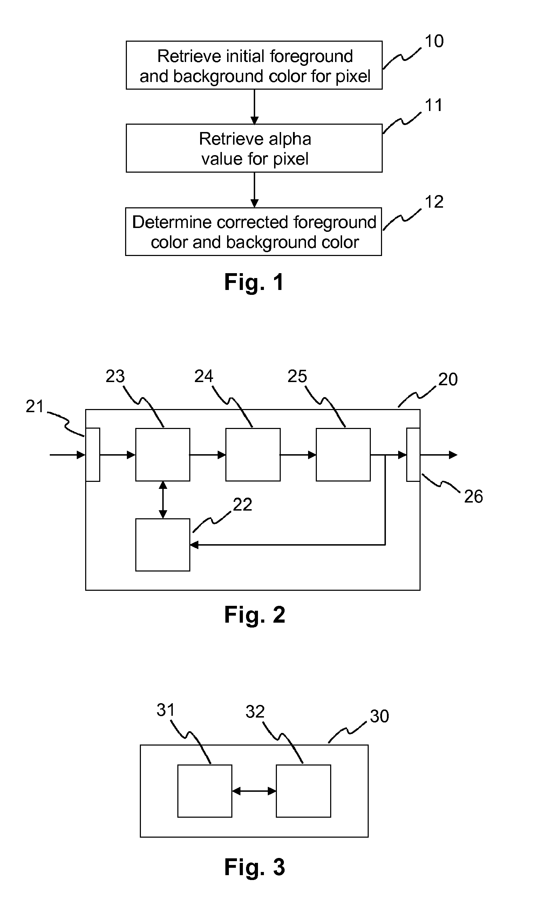

Fig. 1 schematically illustrates one embodiment of a method for color correction in an alpha matting process. In a first step an initial foreground color and an initial background color associated with a pixel with an original color in a region of transition between a foreground object and a background are retrieved 10. Then an alpha value associated with the pixel is retrieved 11. Finally, a corrected foreground color and a corrected background color are determined 12 from the original color, the initial foreground color, the initial background color, and the alpha value based on a minimization of an energy function.

One embodiment of an apparatus 20 configured to perform the method for color correction in an alpha matting process is schematically depicted in Fig. 2. The apparatus 20 has an input 21 for receiving an image, e.g. from a network or an external storage system. Alternatively, the image is retrieved from a local storage unit 22. A color retrieving unit 23 retrieves 10 an initial foreground color and an initial background color associated with a pixel with an original color in a region of transition between a foreground object and a background. The color retrieving unit 23 retrieves 10 these values by analyzing the image, by requesting these values from another processing unit, or by accessing already available stored values. An alpha value retrieving unit 24 retrieves 11 an alpha value associated with the pixel, e.g. from an alpha matting stage or by accessing already available stored values. A color correction unit 25 then determines 12 a corrected foreground color and a corrected background color from the original color, the initial foreground color, the initial background color, and the alpha value based on a minimization of an energy function. The color correction results are preferably made available via an output 26. They may also be stored on the local storage unit 22, processed for being rendered on a display connected to the apparatus, or processed for being transmitted to further processing units. The output 26 may also be combined with the input 21 into a single bidirectional interface. Each of the different units 23, 24, 25 can be embodied as a different processor. Of course, the different units 23, 24, 25 may likewise be fully or partially combined into a single unit or implemented as software running on a processor.

Another embodiment of an apparatus 30 configured to perform the method for color correction in an alpha matting process is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit 22 and the memory device 32 may include volatile and/or non-volatile memory regions and storage devices such as hard disk drives, DVD drives. A part of the memory is a non-transitory program storage device readable by the processing device 31, tangibly embodying a program of instructions executable by the processing device 31 to perform program steps as described herein according to the principles of the invention.

A more detailed description will be given in the following.

The inputs to the method are the color $I$ of a pixel in the unknown region of the trimap, an initial foreground color $F$ associated with the pixel, an initial background color $B$ associated with the pixel, and an alpha value $\alpha \in [0..1]$ associated with the pixel. The foreground color $F$ and the background color $B$ are to be refined.

In the approach, a pair of corrected colors $F'$ and $B'$ is determined that - together with the pixel's color $I$ and its alpha value $\alpha$ - fulfill the compositing equation:

$$I = \alpha F' + (1 - \alpha)B'. \qquad (2)$$

Since there are many solutions to the problem, a pair of $F'$ and $B'$ is selected that minimizes the following energy:

$$E = w_f |F' - F|^2 + w_b |B' - B|^2. \qquad (3)$$

In the equation, $w_f$ and $w_b$ are constant weighting factors. This means a solution is sought that minimizes the weighted shifts in color space. Note that this is equivalent to minimizing $E = w|F' - F|^2 + |B' - B|^2$ or $E = |F' - F|^2 + w|B' - B|^2$. In these formulations, the single weighting factor $w$ controls the relative weights of the two terms.

$E$ is a quadratic function of $B'$, so its minimum can be determined by computing the partial derivatives and setting them to zero.

Solving Equation (2) for $F'$ yields

$$F' = \frac{I - (1 - \alpha)B'}{\alpha} \quad (\alpha \neq 0) \qquad (4)$$

Putting Equation (4) into Equation (3) to eliminate $F'$, and minimizing $E$, $B'$ can be computed as

$$B' = \frac{w_f(1 - \alpha)[I - \alpha F] + \alpha^2 w_b B}{w_f(1 - \alpha)^2 + \alpha^2 w_b} \quad (\alpha \neq 0) \qquad (5)$$

Note that $F'$ can now be computed from Equation (4).

The above holds for $\alpha \neq 0$, because Equation (4) is only valid for $\alpha \neq 0$. For $\alpha = 0$, Equation (2) yields

$$B'_{\alpha=0} = I \qquad (6)$$

This is reasonable, since for a fully transparent pixel the background color is the color observable in the image. Because $\lim_{\alpha \to 0} B'(\alpha) = I$, Equation (5) is a continuous function of $\alpha$ in its definition interval **[0..1]**. Furthermore, for $\alpha = 0$ the foreground color is generally meaningless. For practical reasons it can, for example, be left unmodified, i.e. $F'_{\alpha=0} = F$.

For $\alpha = 1$, i.e. the pixel is deemed to be fully foreground, Equation (4) yields $F'_{\alpha=1} = I$ and Equation (5) yields $B'_{\alpha=1} = B$. This is also reasonable, because for a fully opaque pixel, the foreground color is the color detectable in the image. Because $\lim_{\alpha \to 1} F'(\alpha) = I$, Equation (4) is a continuous function of $\alpha$ in its definition interval [0..1]. Furthermore, for $\alpha = 1$ the background color can be left unmodified.

The correction for pixels, which are deemed to be fully foreground ($\alpha = 1$), to the color visible in the image is obviously meaningful. The proposed correction method extends this to mixed pixels: The closer $\alpha$ approaches a value of 1, the closer the corrected foreground color approaches the original image color $I$. The closer $\alpha$ approaches a value of 0, the closer the corrected background color approaches the original image color $I$.

In one embodiment of the present invention, $w_f$ is set to $\alpha$ and $w_b$ is set to $(1 - \alpha)$. This yields

$$B' = I + \alpha(B - F) \qquad (7)$$

and

$$F' = I - (1 - \alpha)(B - F), \qquad (8)$$

which can be rewritten as

$$B' = B + d \qquad (9)$$

and

$$F' = F + d \qquad (10)$$

with $d = I - \alpha F - (1 - \alpha)B$.

This means that the initial foreground color $F$ and the initial background color $B$ are parallel shifted in color space by a common displacement vector $d$, to yield $F'$ and $B'$.

In another embodiment of the invention, $w_f = w_b = $ **const.** This yields

$$B' = \frac{(1 - \alpha)[I - \alpha F] + \alpha^2 B}{(1 - \alpha)^2 + \alpha^2}. \qquad (11)$$

Note that in both cases $F'$ can be computed from Equation (4) and that $B'_{\alpha=0}$, $F'_{\alpha=0}$, $B'_{\alpha=1}$, and $F'_{\alpha=1}$ remain the same as described above. They are independent of $w_f$ and $w_b$.

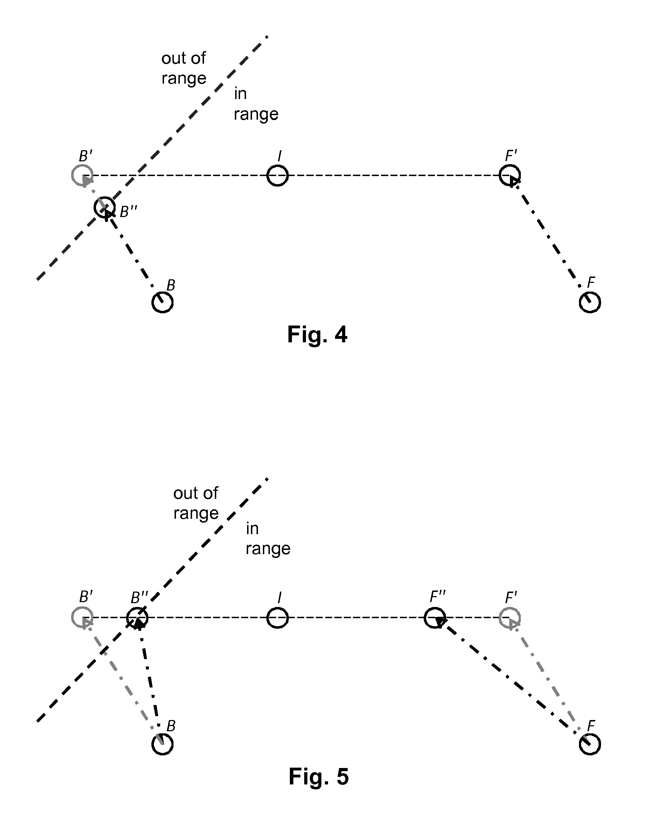

Without any additional care, color values may be pushed outside their valid range, which is typically between 0 and 255. To avoid this, in one embodiment it is detected whether one or more components of a corrected color would fall outside the valid color range. In this case, according to a first solution the color is simply left as it is, i.e. no correction at all is performed. According to another solution, the displacement vector used for parallel shifting the initial colors is reduced until all color components are within the allowed range. This is illustrated in Fig. 4.

This means, however, that the corrected background color $B''$, the corrected foreground color $F'$, and the pixel's color $I$ in the image may not fulfill the compositing equation, i.e. mixing $B''$ and $F'$ by $\alpha$ does not yield $I$.

To overcome this, a different solution may be used. This solution is illustrated in Fig. 5. In the most general aspect, a final pair of corrected colors $B''$ and $F''$ is computed such that

    1. their numerical values are within a defined numerical interval;
    2. $B''$ and $F''$ lie on the line defined by one of the preliminary corrected colors ($B'$ or $F'$ or both) and $I$; and
    3. $B''$, $F''$, $I$ and $\alpha$ fulfil the *compositing equation*.

To show the performance of the present solutions for improving foreground colors, the challenging alpha matting benchmark training data set from [1] was used. For this data set, ground-truth alpha mattes and foreground colors are available. The initial colors **F** and **B** were estimated using the sampling stage of Global Matting as presented in [4].

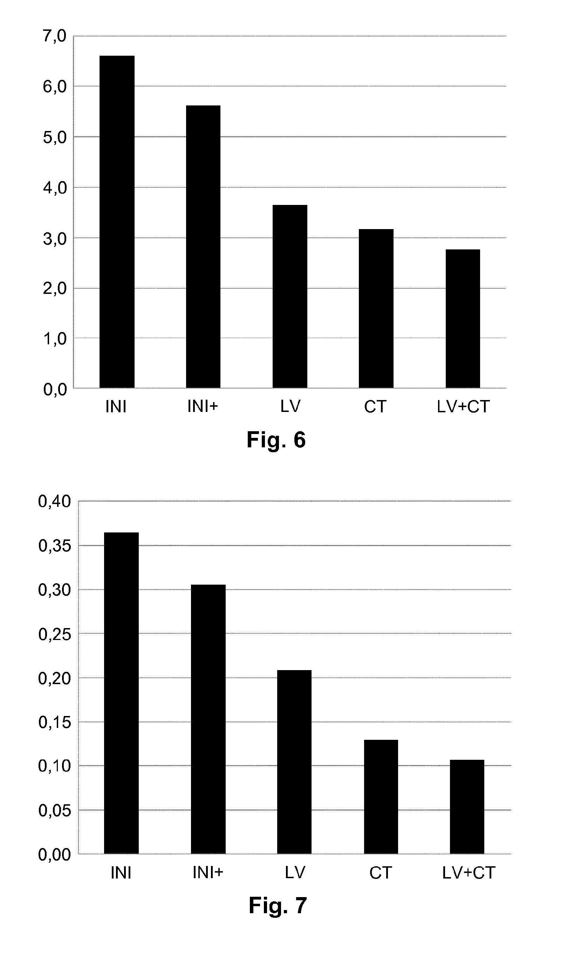

In the diagrams in Figs. 6 and 7 the results of the proposed solutions are compared with results of three other methods. In the figures, "INI" is the error of the initial foreground, "INI+" the slightly improved foreground, where the estimated foreground color for pixels deemed fully foreground ($\alpha = 1$) are corrected to the color observed in the image:

$$F' = \begin{cases} I \text{ if } \alpha = 1 \\ F \text{ otherwise} \end{cases}. \qquad (12)$$

"LV" represents the method for re-estimating the foreground described in [2]. "CT" is the present solution for the case of $w_f = w_b = \text{const.}$ "LV+CT" is the method in [2] further refined by the "CT" approach with $w_f = w_b = \text{const.}$

The diagrams show the errors for the different methods in terms of Sum of Absolute Differences (SAD) in Fig. 6 and Mean Square Error (MSE) in Fig. 7, weighted by $\alpha$. They are computed as follows:

$$\text{SAD} = \frac{1}{|U|} \sum_{i \epsilon U} \alpha_i \cdot |F_i - G_i| \qquad (13)$$

and

$$\text{MSE} = \frac{1}{|U|} \sum_{i \epsilon U} \alpha_i \cdot |F_i - G_i|^2, \qquad (14)$$

where **U** is the set of pixels in the unknown region, $|U|$ the number of pixels therein, index **i** an image pixel, $\alpha_i$ its ground-truth alpha value, $F_i$ its corrected foreground color (as provided by the different methods), and $G_i$ its ground-truth foreground color. The color differences are weighted by $\alpha$. The smaller an alpha value is, the smaller is the amount of light from the foreground object that has hit the sensor element, the less precise is the estimate, and the less important is an error in the estimated color. In the extreme case of an alpha value of 0, there is no foreground at the pixel at all, so the estimated foreground color is meaningless and should have no impact on the error.

The diagrams show that the present correction method "CT" outperforms "LV" both in terms of SAD and MSE. In addition, the "LV+CT" bar demonstrates the versatility of the present approach by being able to further improve the colors. Therefore, the proposed methods are not only useful by themselves, but can be combined with any existing color refinement stage in an alpha matting pipeline.

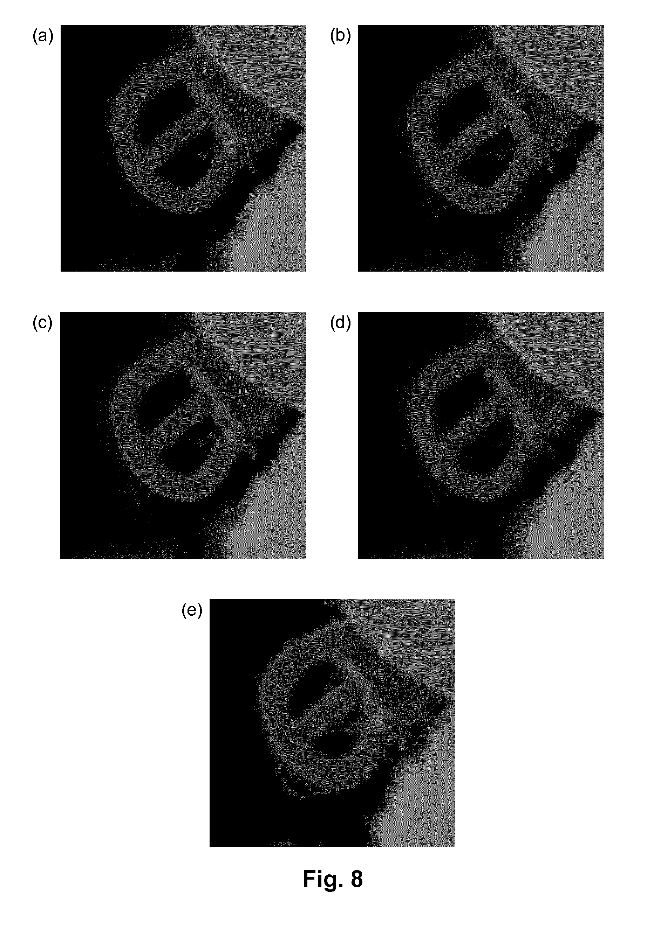

Also visual comparisons of the results were conducted. As described above, one aspect of the proposed solutions is to detect whether one or more components of a corrected color would fall outside the valid color range. Fig. 8 shows results of different foregrounds multiplied by alpha. Fig. 8(a) depicts the initial (input) foreground. Fig. 8(b) depicts the solution "CT" without range analysis and correction. In this case a light-colored contour is produced. Fig. 8(c) shows the solution "CT" with range analysis and correction enabled. With the feature enabled, the light-colored contour disappears. Fig. 8(d) depicts results obtained with the "LV" method. The ground truth is depicted in Fig. 8(e).

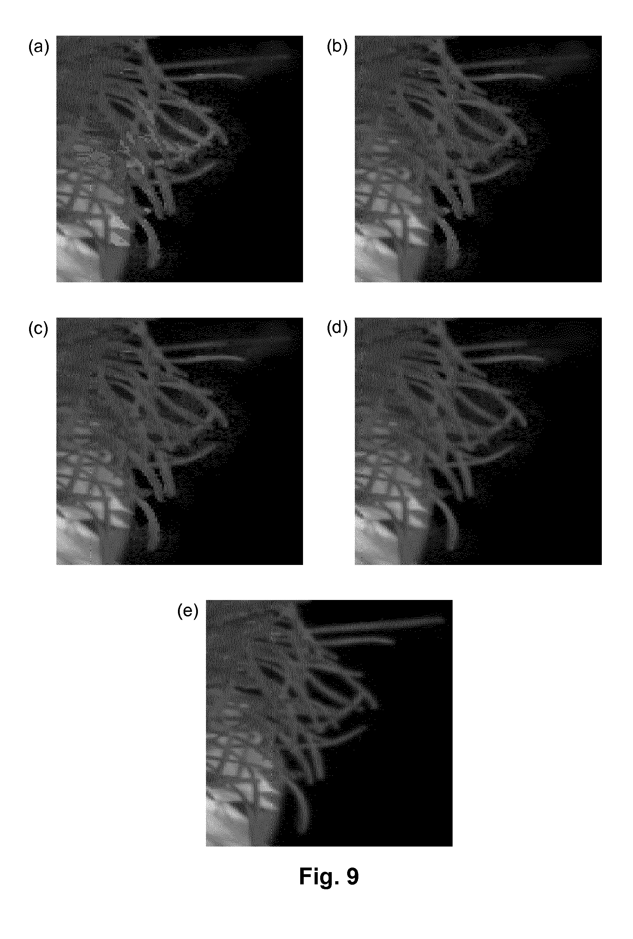

A further visual comparison is depicted in Fig. 9. Fig. 9(a) again shows the initial (input) foreground. Fig. 9(b) depicts the solution "CT" without range analysis and correction, Fig. 9(c) the solution "CT" with range analysis and correction enabled. Fig. 9(d) again depicts results obtained with the "LV" method. Fig. 9(e) depicts the ground truth. The "LV" method misses to reconstruct the outer portion of the top strand, while the results obtained with the present solutions exhibit more noise, and the edges of the strands look a little too light-colored. This is likely because of poor initial color estimates as visible in Fig. 9(a). Since the results of the "CT" method with the range analysis and correction feature enabled are visually indistinguishable from the results with the feature disabled, the initial corrected foreground colors F' are apparently mostly within the allowed numerical limit, so that the feature does not further alter the colors.

## CITATIONS

[1] www.alphamatting.com

[2] Levin et al.: "A Closed-Form Solution to Natural Image Matting", IEEE Transactions on Pattern Analysis and Machine Intelligence, Vol. 30 (2008), pp. 228-242.

[3] Kohler et al.: "Improving Alpha Matting and Motion Blurred Foreground Estimation", Proceedings of the 2013 IEEE International Conference on Image Processing (ICIP), pp. 3446-3450.

[4] He et al.: "A Global Sampling Method for Alpha Matting", Proceedings of the 2011 IEEE Conference on Computer Vision and Pattern Recognition (CVPR), pp. 2049-2056.

**Claims**

1. A method for color correction in an alpha matting process for an image, the method **comprising**:

   - retrieving (10) an initial foreground color and an initial background color associated with a pixel with an original color in a region of transition between a foreground object and a background;
   - retrieving (11) an alpha value associated with the pixel; and
   - determining (12) a corrected foreground color and a corrected background color from the original color, the initial foreground color, the initial background color, and the alpha value based on a minimization of an energy function.

2. The method according to claim 1, **further** comprising rendering the image by applying the corrected foreground color and corrected background color.

3. The method according to claim 1 or 2, **wherein** the energy function comprises a foreground color weighting factor for weighting a shift of the foreground color in color space and a background color weighting factor for weighting a shift of the background color in color space.

4. The method according to claim 3, **wherein** the foreground color weighting factor is alpha and the background color weighting factor is 1 minus alpha.

5. The method according to one of claims 1 to 4, **further** comprising controlling whether the corrected foreground color or the corrected background color violates a color value range.

6. The method according to claim 5, **wherein** in case the corrected foreground color or the corrected background color violates a color value range, no correction is applied to the affected color.

7. The method according to claim 5, **wherein** in case the corrected foreground color or the corrected background color violates a color value range, the correction of the affected color is reduced such that all corrected color components are within the color value range.

8. The method according to claim 5, **wherein** in case the corrected foreground color or the corrected background color violates a color value range, a final corrected foreground color and a final corrected background color are determined, which fulfil a compositing equation and are located on a line in color space defined by the corrected foreground color and the corrected background color.

9. A computer readable non-transitory storage medium having stored therein instructions enabling color correction in an alpha matting process, which, when executed by a computer, cause the computer to:

   - retrieve (10) an initial foreground color and an initial background color associated with a pixel with an original color in a region of transition between a foreground object and a background;
   - retrieve (11) an alpha value associated with the pixel; and
   - determine (12) a corrected foreground color and a corrected background color from the original color, the initial foreground color, the initial background color, and the alpha value based on a minimization of an energy function.

10. An apparatus (20) configured to perform color correction in an alpha matting process, the apparatus (20) **comprising**:

    - a color retrieving unit (23) configured to retrieve (10) an initial foreground color and an initial background color associated with a pixel with an original color in a region of transition between a foreground object and a background;
- an alpha value retrieving unit (24) configured to retrieve (11) an alpha value associated with the pixel; and
- a color correction unit (25) configured to determine (12) a corrected foreground color and a corrected background color from the original color, the initial foreground color, the initial background color, and the alpha value based on a minimization of an energy function.

11. An apparatus (30) configured to perform color correction in an alpha matting process, the apparatus (30) comprising a processing device (31) and a memory device (32) having stored therein instructions, which, when executed by the processing device (31), cause the apparatus (30) to:

- retrieve (10) an initial foreground color and an initial background color associated with a pixel with an original color in a region of transition between a foreground object and a background;
- retrieve (11) an alpha value associated with the pixel; and
- determine (12) a corrected foreground color and a corrected background color from the original color, the initial foreground color, the initial background color, and the alpha value based on a minimization of an energy function.

Retrieve initial foreground
and background color for pixel — 10

Retrieve alpha
value for pixel — 11

Determine corrected foreground
color and background color — 12

**Fig. 1**

**Fig. 2**

**Fig. 3**

out of
range
in
range

B'

I

F'

B''

B

F

**Fig. 4**

out of
range
in
range

B'

B''

I

F''

F'

B

F

**Fig. 5**

Fig. 6

Fig. 7

**Fig. 8**

(a)

(b)

(c)

(d)

(e)

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEVIN et al.** A Closed-Form Solution to Natural Image Matting. *IEEE Transactions on Pattern Analysis and Machine Intelligence,* 2008, vol. 30, 228-242
- **KOHLER et al.** Improving Alpha Matting and Motion Blurred Foreground Estimation. *Proceedings of the 2013 IEEE International Conference on Image Processing (ICIP),* 2013, 3446-3450

- **HE et al.** A Global Sampling Method for Alpha Matting. *Proceedings of the 2011 IEEE Conference on Computer Vision and Pattern Recognition (CVPR),* 2011, 2049-2056